(19) Europäisches Patentamt
European Patent Office
Office européen des brevets

(11) EP 3 532 309 B1

(12) **EUROPEAN PATENT SPECIFICATION**

(45) Date of publication and mention of the grant of the patent:
**29.07.2020 Bulletin 2020/31**

(21) Application number: **17800624.3**

(22) Date of filing: **31.10.2017**

(51) Int Cl.:
***B60C 1/00*** *(2006.01)* ***C08L 9/06*** *(2006.01)*

(86) International application number:
**PCT/JP2017/039232**

(87) International publication number:
**WO 2018/079801 (03.05.2018 Gazette 2018/18)**

(54) **A TIRE COMPRISING A TREAD**

REIFEN MIT EINER LAUFFLÄCHE

PNEUMATIQUE COMPRENANT UNE BANDE DE ROULEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2016 PCT/JP2016/082277**

(43) Date of publication of application:
**04.09.2019 Bulletin 2019/36**

(73) Proprietor: **Compagnie Générale des Etablissements Michelin**
**63000 Clermont-Ferrand (FR)**

(72) Inventor: **SAKURADA, Tomoya**
**Tokyo 163-1073 (JP)**

(74) Representative: **Regimbeau**
**20, rue de Chazelles**
**75847 Paris Cedex 17 (FR)**

(56) References cited:
**EP-A1- 2 902 436**
**WO-A1-2016/109724**
**KR-A- 20130 074 499**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The field of the invention is that of rubber compositions for tires, more precisely rubber compositions for tire treads suitable for snow tires or winter tires capable of rolling over ground surfaces covered with snow.

### Background Art

As is known, the snow tires classified in a category of use "snow", identified by an inscription the alpine symbol ("3-peak-mountain with snowflake), marked on their sidewalls, mean tires whose tread patterns, tread compounds and/or structures are primarily designed to achieve, in snow conditions, a performance better than that of normal tires intended for normal on-road use with regard to their abilities to initiate, maintain or stop vehicle motion.

### Citation List

### Patent Literature

PTL 1: WO 2012/069565

The patent application (Patent literature 1), discloses a tire tread that comprises a rubber composition based on a functional diene elastomer, a reinforcing inorganic filler and a plasticizing agent, said tire having an improved grip on snow without deteriorating the grip on wet.

Snowy ground has a feature of having a low friction coefficient and a constant objective of tire manufacturers is improvement of a grip performance of tires on snow without deterioration of the grip performance on wet.

### Summary of Invention

### Technical Problem

Now, during their research, the inventors have discovered that a specific rubber composite structure with external and internal portions forming a tire tread makes it possible to unexpectedly improve the grip performance of the tire on snow without deteriorating the grip performance on wet.

In the present description, unless expressly stated otherwise, all the percentages (%) indicated are percentages by weight (wt%).

The expression "elastomer matrix" is understood to mean, in a given composition, all of the elastomers present in said rubber composition.

The abbreviation "phr" signifies parts by weight per hundred parts by weight of the elastomer matrix in the considered rubber composition.

In the present description, unless expressly indicated otherwise, each $Tg_{DSC}$ (glass transition temperature) is measured in a known way by DSC (Differential Scanning Calorimetry) according to Standard ASTM D3418-08.

Any interval of values denoted by the expression "between a and b" represents the range of values of greater than "a" and of less than "b" (i.e. the limits a and b excluded) whereas any interval of values denoted by the expression "from a to b" means the range of values going from "a" to "b" (i.e. including the strict limits a and b).

The expression "based on" should be understood in the present application to mean a composition comprising the mixture(s) and/or the product of the reaction of the various constituents used, some of the constituents being able or intended to react together, at least partly, during the various manufacturing phases of the composition, in particular during the vulcanization (curing).

As a tire has a geometry of revolution about an axis of rotation, the geometry of the tire is generally described in a meridian plane containing the axis of rotation of the tire, and the following definitions of directions of the tire are understood in the present application:

- A radial direction is a direction perpendicular to the axis of rotation of the tire;
- An axial direction is a direction parallel to the axis of rotation of the tire;
- A circumferential direction is a direction perpendicular to the meridian plane.

A plane being perpendicular to the axis of rotation of the tire and passing through the middle of a tread surface of the tire is referred to as an equatorial plane of the tire.

In what follows, expressions "radially", "axially" and "circumferentially" respectively mean "in the radial direction",

"in the axial direction" and "in the circumferential direction". Expressions "radially on the inside (radially inner or radially internal), or respectively radially on the outside (radially outer or radially external)" mean "closer or, respectively, further away, from the axis of rotation of the tire, in the radial direction, than". Expressions "axially on the inside (axially inner or axially interior) or respectively axially on the outside (axially outer or axially exterior)" mean "closer or, respectively further away, from the equatorial plane, in the axial direction, than". Respective dimensions of a given element in the radial, axial and circumferential directions will also be denoted "radial thickness or height", "axial width" and "circumferential length" of this element. Expression "laterally" mean "in the circumferential or axial direction".

**Solution to Problem**

A first aspect of the invention is a tire having a tread comprising at least two radially superposed portions which comprise a radially external portion intended to come into contact with ground during rolling, the radially external portion being made of a first rubber composition, and a radially internal portion made of a second rubber composition which is different from the first rubber composition;
wherein the first rubber composition is based on at least:

- an elastomer matrix ;
- a reinforcing filler comprising between 80 and 200 phr of a reinforcing inorganic filler; and
- a plasticizing agent comprising 0 to less than 20 phr, preferably 0 to less than 15 phr, of a liquid diene polymer having a glass transition temperature ($Tg_{DSC}$) of less than - 70°C;

wherein the second rubber composition is based on at least:

- an elastomer matrix;
- a reinforcing filler comprising 20 to 200 phr, preferably 20 to 190 phr, more preferably 20 to 180 phr, still more preferably 20 to 170 phr, particularly 20 to 160 phr, of a reinforcing inorganic filler; and
- a plasticizing agent comprising between 5 and 100 phr, preferably between 10 and 90 phr, of a liquid diene polymer having a glass transition temperature ($Tg_{DSC}$) of less than
- 70°C;

wherein the amount in phr of the liquid diene polymer in the first rubber composition is lower than that in the second rubber composition.

**Advantageous Effects of Invention**

The rubber compositions of the tread of the tire make it possible to improve the grip performance of the tire on snow without deteriorating the grip performance on wet.

**Description of Embodiments**

The tires of the invention are particularly intended to equip passenger motor vehicles, including 4×4 (four-wheel drive) vehicles and SUV (Sport Utility Vehicles) vehicles, and industrial vehicles particularly selected from vans and heavy duty vehicles (i.e., bus or heavy road transport vehicles (lorries, tractors, trailers)).
Each of the below aspect(s), the embodiment(s) and the variant(s) including each of the preferred range(s) and/or matter(s) may be applied to any one of the other aspect(s), the other embodiment(s) and the other variant(s) of the invention unless expressly stated otherwise.
Elastomer (or loosely "rubber", the two terms being regarded as synonyms) of the "diene" type is to be understood in a known manner as an (meaning one or more) elastomer derived at least partly (i.e. a homopolymer or a copolymer) from diene monomers (monomers bearing two carbon-carbon double bonds, conjugated or not).
These diene elastomers can be classified into two categories: "essentially unsaturated" or "essentially saturated". Generally, the expression "essentially unsaturated" is understood to mean a diene elastomer resulting at least in part from conjugated diene monomers having a content of units of diene origin (conjugated dienes) which is greater than 15% (mol %); thus it is that diene elastomers such as butyl rubbers or diene/α-olefin copolymers of the EPDM type do not fall under the preceding definition and may especially be described as "essentially saturated" diene elastomers (low or very low content of units of diene origin, always less than 15%). In the category of "essentially unsaturated" diene elastomers, the expression "highly unsaturated" diene elastomer is understood to mean in particular a diene elastomer having a content of units of diene origin (conjugated dienes) which is greater than 50%.
Although it applies to any type of diene elastomer, a person skilled in the art of tires will understand that the

invention is preferably employed with essentially unsaturated diene elastomers.

Given these definitions, the expression diene elastomer capable of being used in the compositions in accordance with the invention is understood in particular to mean:

(a) - any homopolymer obtained by polymerization of a conjugated diene monomer, preferably having from 4 to 12 carbon atoms;

(b) - any copolymer obtained by copolymerization of one or more conjugated dienes with one another or with one or more vinyl aromatic compounds preferably having from 8 to 20 carbon atoms.

The following are suitable in particular as conjugated dienes: 1,3-butadiene, 2-methyl-1,3-butadiene, 2,3-di($C_1$-$C_5$ alkyl)-1,3-butadienes, such as, for example, 2,3-dimethyl-1,3-butadiene, 2,3-diethyl-1,3-butadiene, 2-methyl-3-ethyl-1,3-butadiene or 2-methyl-3-isopropyl-1,3-butadiene, an aryl-1,3-butadiene, 1,3-pentadiene or 2,4-hexadiene. The following, for example, are suitable as vinylaromatic compounds: styrene, ortho-, meta- or para-methylstyrene, the"vinyltoluene" commercial mixture, para-(tert-butyl) styrene, methoxystyrenes, chlorostyrenes, vinylmesitylene, divinylbenzene or vinylnaphthalene.

A second aspect of the invention is the tire according to the first aspect, wherein the second rubber composition is such that the elastomer matrix comprises at least a diene elastomer selected from the group consisting of polybutadienes (BRs), synthetic polyisoprenes (IRs), natural rubber (NR), butadiene copolymers, isoprene copolymers, and the mixtures thereof.

A third aspect of the invention is the tire according to the first aspect, wherein the second rubber composition is such that the elastomer matrix comprising 20 to 100 phr of a first diene elastomer bearing at least one SiOR function, R being hydrogen or a hydrocarbon radical, and optionally, 0 to 80 phr of a second diene elastomer which is different from the first diene elastomer.

According to a preferred embodiment of the third aspect, in the second rubber composition, the first diene elastomer may be selected from the group consisting of polybutadienes (BRs), synthetic polyisoprenes (IRs), natural rubber (NR), butadiene copolymers, and the mixtures thereof; such copolymers are selected more preferably from the group consisting of butadiene-styrene copolymers (SBRs) and the mixtures thereof.

According to a preferred embodiment of this embodiment or the third aspect, in the second rubber composition, the first diene elastomer may have any microstructure which depends on the polymerization conditions used, in particular on the presence or absence of a modifying and/or randomizing agent and on the amounts of modifying and/or randomizing agent employed. This elastomer may, for example, be a block, statistical, sequential or micro sequential elastomer and may be prepared in dispersion or in solution.

Generally, a function borne by an elastomer, particularly a diene elastomer, may be located on the elastomer chain end(s) or may not be located at the elastomer chain ends, that is, may be away from the chain ends. The first case occurs for example when the diene elastomer is prepared using a polymerization initiator bearing the function or using a functionalizing agent. The second case occurs for example when the diene elastomer is modified by the use of a coupling agent or star-branching agent bearing the function.

The expression "hydrocarbon radical" means a monovalent group essentially consisting of carbon and hydrogen atoms. Such a group may comprise at least one heteroatom, and it is known that the assembly formed by the carbon and hydrogen atoms represents the major number fraction in the hydrocarbon radical, for example alkyl or alkoxyalkyl; preferably assembly formed by the carbon and hydrogen atoms represents the entirety of the hydrocarbon radical(s), for example alkyl. Such a SiOR (R is alkyl or alkoxyalkyl) is referred as an "alkoxysilane" function. While, a SiOH (R is a hydrogen atom) is referred as a "silanol" function.

A fourth aspect of the invention is the tire according to the third aspect, wherein the second rubber composition is such that the first diene elastomer is a styrene-butadiene copolymer (SBR), preferably a solution styrene-butadiene copolymer which is a copolymer of butadiene and styrene, prepared in solution.

A fifth aspect of the invention is the tire according to the third or the fourth aspect, wherein the second rubber composition is such that the SiOR function is not located at the chain ends of the first diene elastomer.

According to a first variant of the fifth aspect, the SiOR function borne by the first diene elastomer in the second rubber composition may be a pendant group, which is equivalent to saying that the silicon atom of the SiOR function may not be inserted between the carbon-carbon bonds of the elastomer chain of the first diene elastomer. A diene elastomer bearing a pendant SiOR function may for example be prepared by hydrosilylation of the elastomer chain by a silane bearing an alkoxysilane group, followed by hydrolysis of the alkoxysilane function to give a SiOR function.

According to a second variant of the fifth aspect, the SiOR function borne by the first diene elastomer in the second rubber composition may not be a pendant group, but may be situated in the elastomer chain, that is, may be within the elastomer chain, which is equivalent to saying that the silicon atom of the SiOR function may be inserted between the carbon-carbon bonds of the elastomer chain of the first diene elastomer. Such a diene elastomer may be prepared according to the procedure described in a patent EP 2 285 852 B1. This second variant is preferential and

applies to the fifth aspect.

A sixth aspect of the invention is the tire according to any one of the third to the fifth aspects, wherein the second rubber composition is such that the first diene elastomer further bears at least one amine function, preferably at least one tertiary amine function.

According to a preferred embodiment of the sixth aspect, the amine function borne by the first diene elastomer may be a tertiary amine function. Mention will be made, as tertiary amine function, of the amines substituted with $C_1$-$C_{10}$ alkyl radicals, preferably $C_1$-$C_4$ alkyl, more preferably methyl or ethyl radical(s).

According to a preferred embodiment of this embodiment or the sixth aspect, the amine function borne by the first diene elastomer in the second rubber composition may be a pendant group. The pendant position of the amine function means, in a known way, that the nitrogen atom of the amine function may not be inserted between the carbon-carbon bonds of the elastomer chain of the first diene elastomer.

A seventh aspect of the invention is the tire according to the sixth aspect, wherein the second rubber composition is such that the SiOR function bears the amine function.

Such a diene elastomer may result from the modification of a diene elastomer by a coupling agent that introduces, the elastomer chain, an alkoxysilane group bearing an amine function according to the operating procedure described in a patent EP 2 285 852 B1. The following are suitable for example as coupling agent:

N,N-dialkylaminopropyltrialkoxysilanes, $C_1$-$C_{10}$, preferably $C_1$-$C_4$, dialkyl groups, the compounds 3-(N,N-dimethylaminopropyl)trimethoxysilane,
3-(N,N-dimethylaminopropyl)triethoxysilane,
3-(N,N-diethylaminopropyl)trimethoxysilane,
3-(N,N-diethylaminopropyl)triethoxysilane being most particularly preferred, irrespective of the embodiment of the invention.

An eighth aspect of the invention is the tire according to any one of the third to the seventh aspects, wherein the second rubber composition is such that R of the SiOR function is a hydrocarbon radical.

According to a preferred embodiment of the eighth aspect, the hydrocarbon radical may be an alkyl radical, preferably an alkyl radical having 1 to 12 carbon atoms, more preferably a branched, linear or else cyclic alkyl radical having 1 to 12 carbon atoms, still more preferably 1 to 6 carbon atoms, particularly 1 to 4 carbon atoms, more particularly methyl or ethyl radical(s).

A ninth aspect of the invention is the tire according to any one of the third to the eighth aspects, wherein the second rubber composition is such that the first diene elastomer has a glass transition temperature ($Tg_{DSC}$) of lower than -40°C, (notably between -100°C and -40°C), advantageously less than -45°C (notably between -90°C and -45°C).

A tenth aspect of the invention is the tire according to any one of the third to the ninth aspects, wherein the second rubber composition is such that the elastomer matrix comprises 40 to 100 phr, preferably 60 to 100 phr, more preferably 60 to 90 phr, of the first diene elastomer and optionally, 0 to 60 phr, preferably 0 to 40 phr, more preferably 10 to 40 phr, of the second diene elastomer.

According to a preferred embodiment of any one of the third to the ninth aspects, in the second rubber composition, the elastomer matrix may comprise 20 to 90 phr, preferably 20 to 80 phr, more preferably 40 to 80 phr, of the first diene elastomer, and optionally, 10 to 80 phr, preferably 20 to 80 phr, more preferably 20 to 60 phr, of the second diene elastomer.

An eleventh aspect of the invention is the tire according to the tenth aspect, wherein the second rubber composition is such that the elastomer matrix comprises 60 to 80 phr of the first diene elastomer, and 20 to 40 phr of the second diene elastomer.

A twelfth aspect of the invention is the tire according to any one of the third to the eleventh aspects, wherein the second rubber composition is such that the second diene elastomer is selected from the group consisting of polybutadienes, natural rubber, synthetic polyisoprenes, butadiene copolymers, isoprene copolymers and the mixtures thereof.

A thirteenth aspect of the invention is the tire according to the twelfth aspect, wherein the second rubber composition is such that the second diene elastomer is a polybutadiene.

According to a preferred embodiment of the twelfth aspect, in the second rubber composition, the second diene elastomer may be a butadiene copolymer, preferably a styrene-butadiene copolymer.

According to a preferred embodiment of the invention, in the first rubber composition, the elastomer matrix may comprise 20 to 100 phr, preferably 40 to 100 phr, more preferably 50 to 100 phr, still more preferably more than 50 phr and up to 100 phr, of a first diene elastomer bearing at least one SiOR function, R being a hydrogen atom or a hydrocarbon radical, and optionally, 0 to 80 phr, preferably 0 to 60 phr, more preferably 0 to 50 phr, still more preferably 0 to less than 50 phr, of a second diene elastomer which is different from the first diene elastomer. Particularly, in the first rubber composition, the first diene elastomer may be selected from the group consisting of polybutadienes (BRs), synthetic polyisoprenes (IRs), natural rubber (NR), butadiene copolymers, isoprene copolymers and the mixtures thereof; such

copolymers may be selected more particularly from the group consisting of butadiene-styrene copolymers (SBRs) and the mixtures thereof, still more particularly a styrene-butadiene copolymer (SBR), especially a solution styrene-butadiene copolymer.

According to a preferred embodiment of this embodiment, in the first rubber composition, the second diene elastomer may be selected from the group consisting of polybutadienes, natural rubber, synthetic polyisoprenes, butadiene copolymers, isoprene copolymers, and the mixtures thereof, preferably polybutadienes.

Each of the first and the second rubber compositions of the tread of the tire according to the invention is based on a reinforcing filler.

The reinforcing filler may comprise a reinforcing inorganic filler (for instance, silica), carbon black or the mixtures thereof, preferably, the reinforcing filler may predominately comprise the reinforcing inorganic filler, that is, the reinforcing filler may comprise more than 50% by weight of the reinforcing inorganic filler per 100% by weight of the total reinforcing filler. More preferably, the content of reinforcing inorganic filler is more than 60% by weight, still more preferably more than 70% by weight, particularly more than 80% by weight, more particularly more than 90% by weight, per 100% by weight of the total reinforcing filler.

The first rubber composition of the tread of the tire according to the invention is based on a reinforcing filler that comprises between 80 and 200 phr, preferably between 90 and 190 phr, more preferably between 100 and 180 phr, still more preferably 110 to 170 phr, of a reinforcing inorganic filler.

The second rubber composition of the tread of the tire according to the invention is based on a reinforcing filler that comprises 20 to 200 phr, preferably 20 to 190 phr, more preferably 20 to 180 phr, still more preferably 20 to 170 phr, particularly 20 to 160 phr, of a reinforcing inorganic filler.

A fourteenth aspect of the invention is the tire according to any one of the first to the thirteenth aspects, wherein the second rubber composition is such that the reinforcing filler comprises 20 to 150 phr, preferably 20 to 140 phr, more preferably 20 to 130 phr, still more preferably 20 to 120 phr, particularly 20 to 110 phr, more particularly 20 to 100 phr, still more particularly 20 to 90 phr, advantageously 30 to 90 phr, more advantageously 40 to 90 phr, still more advantageously 50 to 90 phr, especially 60 to 90 phr, of the reinforcing inorganic filler.

The expression "reinforcing inorganic filler" should be understood here to mean any inorganic or mineral filler, whatever its color and its origin (natural or synthetic), also referred to as "white filler", "clear filler" or even "non-black filler", in contrast to carbon black, capable of reinforcing by itself alone, without means other than an intermediate coupling agent, a rubber composition intended for the manufacture of tires, in other words capable of replacing, in its reinforcing role, a conventional tire-grade carbon black; such a filler is generally characterized, in a known manner, by the presence of hydroxyl (-OH) groups at its surface.

The physical state under the presence of this filler is unimportant, whether it is in the form of powder, microbeads, granules, beads or any other suitable densified form. Of course, the reinforcing inorganic filler of the mixtures of various reinforcing inorganic fillers, preferably of highly dispersible siliceous and/or aluminous fillers is described hereafter.

Mineral fillers of the siliceous type, preferably silica ($SiO_2$) and/or the aluminous type, preferably alumina ($Al_2O_3$) are suitable in particular as the reinforcing inorganic fillers.

The first and the second rubber compositions are such that the reinforcing inorganic filler may be silica. The reinforcing inorganic filler of the reinforcing filler in the first and the second rubber compositions may comprise a type of silica or a blend of several silicas. The silica used may be any reinforcing silica known to a person skilled in the art, in particular any precipitated or pyrogenic silica having a BET surface area and a CTAB specific surface area that are both less than 450 $m^2/g$, preferably from 20 to 400 $m^2/g$. Such silica may be covered or not. Mention will be made, as low specific surface silica, of Sidistar R300 from Elkem Silicon Materials. Mention will be made, as highly dispersible precipitated silicas ("HDSs"), for example, of "Ultrasil 7000" and "Ultrasil 7005" from Evonik, "Zeosil 1165 MP", "Zeosil 1135 MP" and "Zeosil 1115 MP" from Rhodia, "Hi-Sil EZ150G" from PPG, "Zeopol 8715", "Zeopol 8745" and "Zeopol 8755" from Huber or the silicas with a high specific surface area as described in a patent application WO 03/016387. Mention will be made, as pyrogenic silicas, for example, of "CAB-O-SIL S-17D" from Cabot, "HDK T40" from Wacker, "Aeroperl 300/30", "Aerosil 380", "Aerosil 150" or "Aerosil 90" from Evonik. Such silica may be covered, for example, "CAB-O-SIL TS-530" covered with hexamethyldiasilazene or "CAB-O-SIL TS-622" covered with dimethyldichlorosilane from Cabot.

The reinforcing inorganic filler used, particularly in case of that it is silica, has a BET surface area and a CTAB specific surface area that are advantageously 50 to 350 $m^2/g$, more advantageously 100 to 300 $m^2/g$, still more preferably between 150 and 250 $m^2/g$.

The BET surface area is measured according to a known method, that is, by gas adsorption using the Brunauer-Emmett-Teller method described in "The Journal of the American Chemical Society", Vol. 60, page 309, February 1938, and more specifically, in accordance with the French standard NF ISO 9277 of December 1996 (multipoint volumetric method (5 points); where gas: nitrogen, degassing: 1 hour at 160°C, relative pressure range p/po: 0.05 to 0.17). The CTAB specific surface area is determined according to the French standard NF T 45-007 of November 1987 (method B).

A person skilled in the art will understand that a reinforcing filler of another nature, in particular organic nature, such as carbon black, might be used as filler equivalent to the reinforcing inorganic filler described in the present section,

provided that this reinforcing filler is covered with an inorganic layer, such as silica, or else comprises, at its surface, functional sites, in particular hydroxyls, requiring the use of a coupling agent in order to form the connection between the filler and the elastomer. By way of example, mention may be made of carbon blacks for tires, such as described in patent applications WO 96/37547 and WO 99/28380.

A fifteenth aspect of the invention is the tire according to any one of the first to the fourteenth aspects, wherein the second rubber composition is such that the reinforcing filler further comprises less than 40 phr (for example, between 0.5 and 40 phr), preferably less than 30 phr (for example, between 1 and 30 phr), more preferably less than 20 phr (for example, between 1.5 and 20 phr), still more preferably less than 10 phr (for example, between 2 and 10 phr), of carbon black.

According to a preferred embodiment of the invention, in the first rubber composition, the reinforcing filler further may comprise less than 40 phr (for example, between 0.5 and 40 phr), preferably less than 30 phr (for example, between 1 and 30 phr), more preferably less than 20 phr (for example, between 1.5 and 20 phr), still more preferably less than 10 phr (for example, between 2 and 10 phr), of carbon black.

Within the ranges indicated, there is a benefit of coloring properties (black pigmentation agent) and anti-UV properties of carbon blacks, without furthermore adversely affecting the typical performance provided by the reinforcing inorganic filler, namely low hysteresis (reduced rolling resistance) and high grip on wet, snow-covered or icy ground.

In order to couple the reinforcing inorganic filler to the elastomer matrix, for instance, the diene elastomer, use can be made, in a known manner, of a coupling agent (or bonding agent) intended to provide a satisfactory connection, of chemical and/or physical nature, between the reinforcing inorganic filler (surface of its particles) and the elastomer matrix, for instance, the diene elastomer. This coupling agent is at least bifunctional. Use can be made in particular of at least bifunctional organosilanes or polyorganosiloxanes.

Use can be made in particular of silane polysulphides, referred to as "symmetrical" or "asymmetrical" depending on their particular structure, as described, for example, in applications WO 03/002648, WO 03/002649 and WO 2004/033548.

Particularly suitable silane polysulphides correspond to the following general formula (I):

(I) Z - A - Sx - A - Z , in which:

- x is an integer from 2 to 8 (preferably from 2 to 5);
- A is a divalent hydrocarbon radical (preferably, $C_1$-$C_{18}$ alkylene groups or $C_6$-$C_{12}$ arylene groups, more particularly $C_1$-$C_{10}$, in particular $C_1$-$C_4$, alkylenes, especially propylene);
- Z corresponds to one of the formulae below:

[Chem.1]

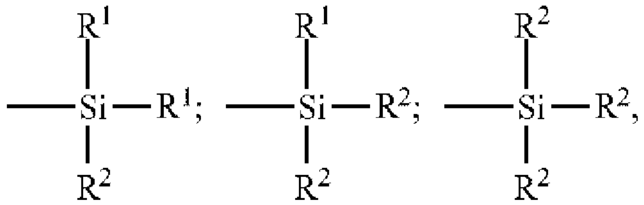

in which:

- the $R^1$ radicals which are unsubstituted or substituted and identical to or different from one another, represent a $C_1$-$C_{18}$ alkyl, $C_5$-$C_{18}$ cycloalkyl or $C_6$-$C_{18}$ aryl group (preferably, $C_1$-$C_6$ alkyl, cyclohexyl or phenyl groups, in particular $C_1$-$C_4$ alkyl groups, more particularly methyl and/or ethyl),
- the $R^2$ radicals which are unsubstituted or substituted and identical to or different from one another, represent a $C_1$-$C_{18}$ alkoxyl or $C_5$-$C_{18}$ cycloalkoxyl group (preferably a group selected from $C_1$-$C_8$ alkoxyls and $C_5$-$C_8$ cycloalkoxyls, more preferably a group selected from $C_1$-$C_4$ alkoxyls, in particular methoxyl and ethoxyl), are suitable in particular, without limitation of the above definition.

In the case of a mixture of alkoxysilane polysulphides corresponding to the above formula (I), in particular normal commercially available mixtures, the mean value of the "x" indices is a fractional number preferably of between 2 and 5, more preferably of approximately 4. However, the present invention can also advantageously be carried out, for example, with alkoxysilane disulphides (x = 2).

Mention will more particularly be made, as examples of silane polysulphides, of bis(($C_1$-$C_4$)alkoxyl($C_1$-$C_4$)alkylsilyl($C_1$-$C_4$)alkyl)polysulphides (in particular disulphides, trisulphides or tetrasulphides), such as, for example, bis(3-trimethoxysilylpropyl) or bis(3-triethoxysilylpropyl)polysulphides. Use is in particular made, among these compounds, of

bis(3-triethoxysilylpropyl)tetrasulphide, abbreviated to TESPT, of formula $[(C_2H_5O)_3Si(CH_2)_3S_2]_2$, or bis(3-triethoxysilylpropyl)disulphide, abbreviated to TESPD, of formula $[(C_2HSO)_3 Si(CH_2)_3S]_2$. Mention will also be made, as preferred examples, of bis(mono($C_1$-$C_4$ )alkoxyldi($C_1$-$C_4$)alkylsilylpropyl)polysulphides (in particular disulphides, trisulphides or tetrasulphides), more particularly bis(monoethoxydimethylsilylpropyl)tetrasulphide, as described in patent application WO 02/083782 (or US 7 217 751).

Mention will in particular be made, as coupling agent other than alkoxysilane polysulphide, of bifunctional POSs (polyorganosiloxanes) or of hydroxysilane polysulphides ($R^2$ = OH in the above formula (I)), such as described in patent applications WO 02/30939 (or US 6 774 255) and WO 02/31041 (or US 2004/051210), or of silanes or POSs carrying azodicarbonyl functional groups, such as described, for example, in patent applications WO 2006/125532, WO 2006/125533 and WO 2006/125534.

As examples of other silane sulphides, mention will be made, for example, of the silanes bearing at least one thiol (-SH) function (referred to as mercaptosilanes) and/or at least one blocked thiol function, such as described, for example, in patents or patent applications US 6 849 754, WO 99/09036, WO 2006/023815, WO 2007/098080, WO 2008/055986 and WO 2010/072685.

Of course, use could also be made of mixtures of the coupling agents described previously, as described in particular in the aforementioned patent application WO 2006/125534.

According to one preferred embodiment of the invention, the content of coupling agent may be from 0.5 to 15wt% relative to the amount of the reinforcing inorganic filler, particularly silica.

According to one preferred embodiment of the invention, each of the rubber compositions (the first and the second rubber compositions) of the tread of the tire according to the invention may be based on less than 30 phr (for example, between 0.1 and 30 phr), preferably less than 25 phr (for example, between 0.5 and 25 phr), more preferably less than 20 phr (for example, between 1 and 20 phr), still more preferably less than 15 phr (for example, between 1.5 and 15 phr) of coupling agent.

The second rubber composition of the tread of the tire according to the invention is based on a plasticizing agent.

The plasticizing agent may comprise a liquid plasticizer(s), a hydrocarbon resin(s), or the mixtures thereof.

The plasticizing agent in the second rubber composition of the tread of the tire according to the invention comprises between 5 and 100 phr, preferably between 10 and 90 phr, of a liquid diene polymer having a glass transition temperature ($Tg_{DSC}$) of less than -70°C (for example, between -120°C and -70°C), preferably less than -80°C (for example, between -110°C and -80°C), more preferably less than -90°C (for example, between -100°C and -90°C). The liquid diene polymer is liquid at 20°C (under atmospheric pressure) by definition. The role of the liquid diene polymer is to soften the matrix by diluting the elastomer and the reinforcing filler, especially on the tire running at air temperature of at most 0°C.

Regarding the content of the liquid diene polymer, below the indicated minimum, the targeted technical effect is insufficient. Wherein the indicated maximum, there is an issue of cost of the liquid diene polymer and a risk of worsening processability.

A sixteenth aspect of the invention is the tire according to any one of the first to the fifteenth aspects, wherein the second rubber composition is such that the plasticizing agent comprises between 15 and 80 phr, preferably between 20 and 70 phr, more preferably between 20 and 60 phr, still more preferably between 20 and 50 phr, particularly between 20 and 40 phr, more particularly between 20 and 30 phr, of the liquid diene polymer.

The first rubber composition of the tread of the tire according to the invention is based on a plasticizing agent that comprises 0 to less than 20 phr, preferably 0 to less than 15 phr, more preferably 0 to less than 10 phr, still more preferably 0 to less than 5 phr, particularly 0 to less than 2 phr, more particularly 0 to less than 1 phr, still more preferably 0 to 0.5 phr, of a liquid diene polymer having a glass transition temperature ($Tg_{DSC}$) of less than -70°C(for example, between -120°C and -70°C), preferably less than -80°C (for example, between -110°C and -80°C), more preferably less than -90°C (for example, between -100°C and -90°C).

The parts of the liquid diene polymer by weight per hundred parts of the elastomer matrix in the first rubber composition is lower than that in the second rubber composition.

Preferably, in the first and the second rubber compositions, the liquid diene polymer may have a number average molar mass of 500 to 50000 g/mol, preferably 1000 to 10000 g/mol, more preferably 7000 to 9000 g/mol.

The number average molar mass (Mn) is a number average molar mass in terms of standard polystyrene, as measured by gel permeation chromatography (GPC). For example, the measuring apparatus and the conditions are as follows:

- Apparatus: GPC apparatus "GPC8020" manufactured by Tosoh Corporation;
- Separation column: "TSKgelG4000HXL" manufactured by Tosoh Corporation;
- Detector: "RI-8020" manufactured by Tosoh Corporation;
- Eluent: tetrahydrofuran (THF);
- Eluent flow rate: 1.0 ml/minute;

- Sample concentration: 5 mg/10 ml;
- Column temperature: 40°C.;

According to one of any aspects, embodiments, variant(s) of the invention, the liquid diene polymer may be polybutenes, polydienes, in particular selected from the group consisting of polybutadienes, polyisoprenes (also known under the name LIRs), copolymers of butadiene and isoprene, else copolymers of butadiene or isoprene and styrene, and the mixture thereof.

Preferably, in the first and the second rubber compositions, the liquid diene polymer may be a liquid polybutadine.

The liquid diene polymer is commercially available; for example, product name: LBR-307 ($Tg_{DSC}$= -95°C) provided by Kuraray co., ltd.

A seventeenth aspect of the invention is the tire according to any one of the first to the sixteenth aspects, wherein the second rubber composition is such that the plasticizing agent further comprises 0 to 50 phr, preferably 0 to 40 phr, more preferably 0 to 30 phr, still preferably 0 to 20 phr, of liquid plasticizer(s) other than the liquid diene polymer.

Any extending oil, whether of aromatic or non-aromatic nature, any liquid plasticizing agent known for its plasticizing properties with regard to elastomer matrixes, for instance, diene elastomers, can be used as the liquid plasticizer(s) other than the liquid diene polymer. At ambient temperature (20°C) under atmospheric pressure, these plasticizers or these oils, which are more or less viscous, are liquids (that is to say, as a reminder, substances that have the ability to eventually take on the shape of their container), as opposite to plasticizing hydrocarbon resin(s) which are by nature solid at ambient temperature (20°C) under atmospheric pressure.

An eighteenth aspect of the invention is the tire according to any one of the first to the seventeenth aspects, wherein the second rubber composition is such that the plasticizing agent further comprises 0 to 50 phr, preferably 0 to 40 phr, more preferably 0 to 30 phr, still more preferably 0 to 20 phr, particularly 0 to 10 phr, of hydrocarbon resin(s) having a glass transition temperature ($Tg_{DSC}$) above 20°C, preferably above 30°C, more preferably above 40°C.

A nineteenth aspect of the invention is the tire according to any one of the first to the eighteenth aspects, wherein the first rubber composition is such that the plasticizing agent comprises 0 to less than 10 phr, preferably 0 to less than 5 phr, more preferably 0 to less than 2 phr, still more preferably 0 to less than 1 phr, particularly 0 to 0.5 phr, of the liquid diene polymer.

A twentieth aspect of the invention is the tire according to any one of the first to the nineteenth aspects, wherein the first rubber composition is such that the plasticizing agent further comprises 0 to 100 phr, preferably 0 to 90 phr, more preferably 0 to 80 phr, still more preferably 0 to 70 phr, particularly 0 to 60 phr, more particularly 10 to 60 phr, of liquid plasticizer(s) other than the liquid diene polymer, and 5 to 100 phr, preferably 5 to 90 phr, more preferably 5 to 80 phr, still more preferably 5 to 70 phr, particularly 10 to 60 phr, of hydrocarbon resin(s) having a glass transition temperature ($Tg_{DSC}$) above 20°C, preferably above 30°C, more preferably above 40°C.

A twenty first aspect of the invention is the tire according to the twentieth aspect, wherein the total content of the liquid plasticizer(s) other than the liquid diene polymer, the liquid diene polymer and the hydrocarbon resin(s) is more than 50 phr, preferably more than 60 phr.

The hydrocarbon resin(s) are polymer well known by a person skilled in the art, which are essentially based on carbon and hydrogen, and thus miscible by nature in rubber composition(s), for instance, diene elastomer composition(s). They can be aliphatic or aromatic or also of the aliphatic/aromatic type, that is to say based on aliphatic and/or aromatic monomers. They can be natural or synthetic and may or may not be petroleum-based (if such is the case, also known under the name of petroleum resins). They are preferably exclusively hydrocarbon, that is to say, that they comprise only carbon and hydrogen atoms.

Preferably, the hydrocarbon resins as being "plasticizing" exhibit at least one, more preferably all, of the following characteristics:

- a $Tg_{DSC}$ of above 20°C (for example between 20°C and 100°C), preferably above 30°C (for example between 30°C and 100°C), more preferably above 40°C (for example between 40°C and 100°C);
- a number-average molecular weight (Mn) of between 400 and 2000 g/mol (more preferably between 500 and 1500 g/mol);
- a polydispersity index (PI) of less than 3, more preferably less than 2 (reminder: PI = Mw/Mn with Mw the weight-average molecular weight).

The macrostructure (Mw, Mn and PI) of the hydrocarbon resins is determined by steric exclusion chromatography (SEC): solvent tetrahydrofuran; temperature 35°C; concentration 1 g/l; flow rate 1 ml/min; solution filtered through a filter with a porosity of 0.45$\mu$m before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

A twenty second aspect of the invention is the tire according to any one of the first to the twenty first aspects,

wherein the first and the second rubber compositions are such that the reinforcing inorganic filler is silica.

A twenty third aspect of the invention is the tire according any one of the first to the twenty second aspects, wherein the first and the second rubber compositions are such that the liquid diene polymer has the glass transition temperature ($Tg_{DSC}$) of less than - 80°C (for example, between -110°C and -80°C), preferably less than -90°C (for example, between -100°C and -90°C).

A twenty fourth aspect of the invention is the tire according any one of the first to the twenty third aspects, wherein the first and the second rubber compositions are such that the liquid diene polymer has a number average molar mass of 500 to 50000 g/mol, preferably 1000 to 10000 g/mol, more preferably 7000 to 9000 g/mol.

A twenty fifth aspect of the invention is the tire according any one of the first to the twenty fourth aspects, wherein the first and the second rubber compositions are such that the liquid diene polymer is a liquid polybutadine.

A twenty sixth aspect of the invention is the tire according the seventeenth or the twentieth aspect, wherein the first and the second rubber compositions are such that the liquid plasticizer(s) other than the liquid diene polymer are selected from the group consisting of polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers, phosphate plasticizers, sulphonate plasticizers and the mixtures thereof.

According to a preferred embodiment of the twenty sixth aspect, in the first and the second rubber compositions, the liquid plasticizer(s) other than the liquid diene polymer are selected from the group consisting of MES oils, TDAE oils, naphthenic oils, vegetable oils and the mixtures thereof, preferably selected from the group consisting of MES oils, vegetable oils and the mixtures thereof. The vegetable oil(s) may be made of an oil selected from the group consisting of linseed, safflower, soybean, corn, cottonseed, turnip seed, castor, tung, pine, sunflower, palm, olive, coconut, groundnut and grapeseed oils, and the mixtures thereof, particularly sunflower oil(s), more particularly sunflower oil(s) containing over 60%, still more particularly over 70%, advantageously over 80%, more advantageously over 90%, still advantageously 100%, by weight of oleic acid.

A twenty seventh aspect of the invention is the tire according to the eighteenth or the twentieth aspect, wherein the first and the second rubber compositions are such that the hydrocarbon resin(s) as being "plasticizing" are selected from the group consisting of cyclopentadiene (abbreviated to CPD) homopolymer or copolymer resins, dicyclopentadiene (abbreviated to DCPD) homopolymer or copolymer resins, terpene homopolymer or copolymer resins, $C_5$ fraction homopolymer or copolymer resins, $C_9$ fraction homopolymer or copolymer resins, alpha-methyl styrene homopolymer or copolymer resins and the mixtures thereof. Use is more preferably made, among the above copolymer resins, of those selected from the group consisting of (D)CPD/vinylaromatic copolymer resins, (D)CPD/terpene copolymer resins, (D)CPD/$C_5$ fraction copolymer resins, (D)CPD/$C_9$ fraction copolymer resins, terpene/ vinylaromatic copolymer resins, terpene/phenol copolymer resins, $C_5$ fraction/ vinyl-aromatic copolymer resins, $C_9$ fraction/vinylaromatic copolymer resins, and the mixtures thereof.

The term "terpene" combines here, in a known way, the $\alpha$-pinene, $\beta$-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, $\alpha$-methylstyrene, ortho-, meta- or para-methylstyrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a $C_9$ fraction (or more generally from a $C_8$ to $C_{10}$ fraction) are suitable, for example, as vinylaromatic monomer. Preferably, the vinylaromatic compound is styrene or a vinylaromatic monomer resulting from a $C_9$ fraction (or more generally from a $C_8$ to $C_{10}$ fraction). Preferably, the vinylaromatic compound is the minor monomer, expressed as molar fraction, in the copolymer under consideration.

The preferred resins above are well known to a person skilled in the art and are commercially available, for example:

- polylimonene resins: by DRT under the name "Dercolyte L120" (Mn=625 g/mol; Mw=1010 g/mol; PI=1.6; $Tg_{DSC}$=72°C) or by Arizona Chemical Company under the name "Sylvagum TR7125C" (Mn=630 g/mol; Mw=950 g/mol; PI=1.5; $Tg_{DSC}$=70°C);
- $C_5$ fraction/vinylaromatic, notably $C_5$ fraction/styrene or $C_5$ fraction/$C_9$ fraction, copolymer resins: by Neville Chemical Company under the names "Super Nevtac 78", "Super Nevtac 85" or "Super Nevtac 99", by Goodyear Chemicals under the name "Wingtack Extra", by Kolon under the names "Hikorez T1095" and "Hikorez T1100", or by Exxon under the names "Escorez 2101" and "ECR 373";
- limonene/styrene copolymer resins: by DRT under the name "Dercolyte TS 105" or by Arizona Chemical Company under the names "ZT115LT" and "ZT5100".

Mention may also be made, as examples of other preferred resins, of phenol-modified $\alpha$-methylstirene resins.

It should be remembered that, in order to characterize these phenol-modified resins, use is made, in a known way, of a number referred to as "hydroxyl number" (measured according to Standard ISO 4326 and expressed in mg KOH/g). α-Methylstirene resins, in particular those modified with phenol, are well known to a person skilled in the art and are available commercially, for example sold by Arizona Chemical Company under the names "Sylvares SA 100" (Mn=660 g/mol; PI=1.5; $Tg_{DSC}$=53°C); "Sylvares SA 120" (Mn=1030 g/mol; PI=1.9; $Tg_{DSC}$=64°C); "Sylvares 540" (Mn=620 g/mol; PI=1.3; $Tg_{DSC}$=36°C; hydroxyl number=56 mg KOH/ g); and "Sylvares 600" (Mn=850 g/mol; PI=1.4; $Tg_{DSC}$=50°C; hydroxyl number=31 mg KOH/g).

The rubber compositions (the first and the second rubber compositions) of the treads of the tires according to the invention may be based on all or a portion(s) of the usual additives generally used in the elastomer compositions intended for the manufacture of treads for tires, in particular for snow tires or winter tires, such as, for example, protection agents, such as antiozone waxes, chemical antiozonants, antioxidants, reinforcing resins, methylene acceptors (for example phenolic novolak resin) or methylene donors (for example HMT or H3M), a crosslinking system based either on sulphur or on donors of sulphur and/or per oxide and/or bismaleimides, vulcanization accelerators, or vulcanization activators.

These compositions can be also based on coupling activators when a coupling agent is used, agents for covering the reinforcing inorganic filler or more generally processing aids capable, in a known way, by virtue of an improvement in the dispersion of the filler in the rubber matrix and of a lowering of the viscosity of the compositions, of improving their property of processing in the raw state; these agents are, for example, hydrolysable silanes, such as alkylalkoxysilanes, polyols, polyethers, amines, or hydroxylated or hydrolysable polyorganosiloxanes.

A twenty eighth aspect of the invention is the tire according to any one of the first to the twenty seventh aspects, wherein the glass transition temperature of the first rubber composition on the maximum tanδwhen subjected to an alternating maximum stress of 0.70 MPa at a frequency of 10 Hz is higher than that of the second rubber composition.

A twenty ninth aspect of the invention is the tire according to the twenty eighth aspect, wherein the glass transition temperature of the second rubber composition on the maximum tanδwhen subjected to an alternating maximum stress of 0.70 MPa at a frequency of 10 Hz is lower than -40°C, preferably between -100°C and -40°C, more preferably between -90°C and -40°C, and wherein the glass transition temperature of the first rubber composition on the maximum tanδwhen subjected to an alternating maximum stress of 0.70 MPa at a frequency of 10 Hz is higher than -30°C, preferably between -30°C and 0°C, more preferably between -30°C and -10°C.

A thirtieth aspect of the invention is the tire according to any one of the first to the twenty ninth aspects, wherein the difference of dynamic share modulus G* between the first rubber composition and the second rubber composition when subjected to an alternating maximum stress of 0.25 MPa at a frequency of 10 Hz and a temperature of -10°C is more than or equal to 1.0 MPa, preferably more than or equal to 2.0 MPa, more preferably more than or equal to 3.0 MPa, still more preferably more than or equal to 4.0 MPa, and the dynamic share modulus G* of the first rubber composition is higher than that of the second rubber composition, and wherein the difference of dynamic share modulus G* between the first rubber composition and the second rubber composition when subjected to an alternating maximum stress of 0.70 MPa at a frequency of 10 Hz and a temperature of 40°C is less than or equal to 0.3 MPa, preferably wherein the dynamic share modulus G* of the second rubber composition when subjected to the alternating maximum stress of 0.70 MPa at the frequency of 10 Hz and the temperature of 40°C is higher than or equal to that of the first rubber composition.

According to a preferred embodiment of the thirtieth aspect, wherein the dynamic share modulus G* of the second rubber composition when subjected to the alternating maximum stress of 0.25 MPa at the frequency of 10 Hz and a temperature of -10°C is less than 2.0 MPa, preferably less than 1.8 MPa, and wherein the dynamic share modulus G* of the second rubber composition when subjected to the alternating maximum stress of 0.70 MPa at the frequency of 10 Hz and the temperature of 40°C is more than 0.7 MPa, preferably more than 0.9 MPa.

A thirty first aspect of the invention is the tire according to the thirtieth aspect, wherein the dynamic share modulus G* of the first rubber composition when subjected to the alternating maximum stress of 0.25 MPa at the frequency of 10 Hz and a temperature of -10°C is more than or equal to 3.0 MPa, and wherein the dynamic share modulus G* of the first rubber composition when subjected to the alternating maximum stress of 0.70 MPa at the frequency of 10 Hz and the temperature of 40°C is more than or equal to 0.7 MPa.

The dynamic shear modulus G* means complex modulus G* defined as being the absolute value of a complex sum of elastic modulus G' and viscous modulus G":

[Math.1]

$$G^* = \sqrt{G'^2 + G"^2}$$

The elastic modulus (G') and the viscous modulus (G") denote dynamic properties well known to a person

skilled in the art. These properties are measured on a Metravib VA4000 type viscoanalyzer on test specimens molded from unvulcanized compositions. Test specimens such as those described in the standard ASTM D 5992-96 (the version published in September 2006, initially approved in 1996), Figure X2.1 (circular embodiment) are used. The diameter "d" of the test specimen is 10 mm (so it therefore has a circular cross section of 78.5 $mm^2$), the thickness "L" of each of the portions of rubber composition is 2 mm, which gives a "d/L" ratio of 5 (unlike in the ISO to standard 2856 mentioned in the ASTM standard at paragraph X2.4 which recommends a d/L value of 2). The response of a test specimen of vulcanized rubber composition subjected to simple alternating sinusoidal shear stresses at a frequency of 10 Hz is recorded. The test specimen is shear loaded sinusoidally at 10 Hz, with an imposed stress (0.70 or 0.25 MPa), symmetrically about its equilibrium position. The test specimen undergoes an accommodation cycle prior to measurement. The test specimen is then shear loaded sinusoidally at 10 Hz, at 100% deformation peak-peak, at an ambient temperature. The measurements are taken as the temperature increases at a gradient of 1.5°C per minute, from a temperature $T_{min}$ below a glass transition temperature (Tg) of the material, up to a temperature $T_{max}$ which may correspond to the rubber plateau of the material. The glass transition temperature (Tg) is a temperature measured on the maximum of a ratio (G'/G") which is tan delta. The glass transition temperature (Tg) can be obtained with the measurement of the above modulus (G' and G"). Before the temperature sweep from $T_{min}$ to $T_{max}$ is begun, the test specimen is stabilized at the temperature $T_{min}$ for 20 minutes in order to have a uniform temperature within the test specimen. The result exploited is the dynamic shear modulus of elasticity (G') and the viscous shear modulus (G") at selected temperatures.

Each of the rubber compositions (the first and the second rubber compositions) of the treads of the tires according to the invention may be manufactured in appropriate mixers using two successive preparation phases well known to a person skilled in the art: a first phase of thermomechanical working or kneading (referred to as "non-productive" phase) at high temperature, up to a maximum temperature of between 110°C and 190°C, preferably between 130°C and 180°C, followed by a second phase of mechanical working (referred to as "productive" phase) at a lower temperature, typically of less than 110°C, for example between 40°C and 100°C, finishing phase during which the crosslinking or vulcanization system is incorporated.

A process which can be used for the manufacture of each of such compositions comprises, for example and preferably, the following steps:

- incorporating in the elastomer matrix(es), for instance, the diene elastomer(s), in a mixer, the reinforcing filler, the plasticizing agent, during a first stage ("non productive" stage) everything being kneaded thermomechanically (for example in one or more steps) until a maximum temperature of between 110°C and 190°C is reached;
- cooling the combined mixture to a temperature of less than 100°C;
- subsequently incorporating, during a second stage (referred to as a "productive" stage), a crosslinking system;
- kneading everything up to a maximum temperature of less than 110°C;
- extruding or calendering the rubber composition thus obtained, in particular in the form of a tire tread.

By way of example, the first (non-productive) phase is carried out in a single thermomechanical stage during which all the necessary constituents are introduced into an appropriate mixer, such as a standard internal mixer, followed, in a second step, for example after kneading for 1 to 2 minutes, by the other additives, optional additional filler-covering agents or processing aids, with the exception of the crosslinking system. The total kneading time, in this non-productive phase, is preferably between 1 and 15 min.

After cooling the mixture thus obtained, the crosslinking system is then incorporated at low temperature (for example, between 40°C and 100°C), generally in an external mixer, such as an open mill; the combined mixture is then mixed (the second (productive) phase) for a few minutes, for example between 2 and 15 min.

The crosslinking system is preferably based on sulphur and on a primary vulcanization accelerator, in particular on an accelerator of sulphenamide type. Added to this vulcanization system are various known secondary accelerators or vulcanization activators, such as zinc oxide, stearic acid, and guanidine derivatives (in particular diphenylguanidine), incorporated during the first non-productive phase and/or during the productive phase. The content of sulphur is preferably between 0.5 and 10 phr, more preferably between 0.5 and 3.0 phr, and that of the primary accelerator is preferably between 0.5 and 5.0 phr.

Use may be made, as accelerator (primary or secondary) of any compound capable of acting as accelerator of the vulcanization of elastomer matrix(es), for instance, diene elastomers in the presence of sulphur, in particular accelerators of the thiazoles type and their derivatives, accelerators of thiurams types, or zinc dithiocar bamates. These accelerators are more preferably selected from the group consisting of 2-mercaptobenzothiazyl disulphide (abbreviated to "MBTS"), N-cyclohexyl-2-benzothiazole sulphenamide (abbreviated to "CBS"), N,N-dicyclohexyl-2 benzothiazolesulphenamide ("DCBS"), N-ter't-butyl-2-ben zothiazolesulphenamide ("TBBS"), N-tert-butyl-2 benzothiazolesulphenimide ("TBSI"), zinc dibenzyldithio-carbamate ("ZBEC"), Tetrabenzylthiuram disulfide ("TBZTD") and the mixtures thereof.

The final composition thus obtained is subsequently calendered, for example in the form of a sheet or of a plaque, in particular for laboratory characterization, or else extruded in the form of a rubber profiled element which can

be used directly as each portion of snow tire tread or winter tire tread.

As for making the tire according to the invention, it is possible to build a first layer of a homogeneous rubber composition, as the first rubber composition, and a second layer of another homogeneous rubber composition, as the second rubber composition, then superpose the first layer onto the second layer or sandwich the other layer(s) or portion(s) between the first layer and the second layer to get a raw tread band, and then build and mold a tire. The first layer forming the external portion is radially outer located to the internal portion. Preferably, the first layer is located so as to contact the road in the new state of the tire. The second layer forming the internal portion is radially inner located to the external portion. Preferably, the second layer is adjacent to the external portion.

A thirty second aspect of the invention is the tire according to any one of the first to the thirty first aspects, wherein the radially internal portion is adjacent to the radially external portion.

The vulcanization (or curing) is carried out in a known way at a temperature generally of between 110°C and 190°C for a sufficient time which can vary, for example, between 5 and 90 min depending in particular on the curing temperature, the vulcanization system adopted and the vulcanization kinetics of the composition under consideration.

The invention relates to the rubber compositions, to the treads and the tires described above, both in the raw state (i.e., before curing) and in the cured state (i.e., after crosslinking or vulcanization).

A thirty third aspect of the invention is the tire according to any one of the first to the thirty second aspects, wherein the tire is a snow tire.

The invention is further illustrated by the following non-limiting examples.

## Example

In the test, two rubber compositions (C-1 and C-2) are compared. The two rubber compositions are based on a diene elastomer (SBR bearing a SiOR function) reinforced with a blend of silica (as a reinforcing inorganic filler) and carbon black, and a plasticizing agent comprising or not comprising liquid polybutadiene (as a liquid diene polymer). The formulations of two rubber compositions are given at Table 1 with the content of the various products expressed in phr, and the dynamic properties measured on the Metravib VA4000 type viscoanalyzer in accordance with ASTM D5992-96 under arbitrary suitable conditions are given in Table 2.

- C-1: without the liquid diene polymer;
- C-2: with the liquid diene polymer.

Each rubber composition was produced as follows: The reinforcing filler, its associated coupling agent, the plasticizing agent, the elastomer matrix and the various other ingredients, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasts in total approximately 3 to 4 minutes, until a maximum "dropping" temperature of 165°C was reached. The mixture thus obtained was recovered and cooled and then sulphur and an accelerator of sulphenamide type were incorporated on an external mixer (homofinisher) at 20 to 30°C, everything being mixed (productive phase) for an appropriate time (for example, between 5 and 12 min).

The rubber compositions thus obtained were subsequently calendered, either in the form of sheets (thickness of 2 to 3 mm) or of fine sheets of rubber, for the measurement of their physical or mechanical properties, or in the form of profiled elements which could be used directly, after cutting and/or assembling to the desired dimensions, for example as tire semi-finished products, in particular as tire treads.

Furthermore, three test specimens (T-1 (a reference), T-2 (a comparative example) and T-3 (an example according to the invention)) having external and internal portions produced by superposition of the sheets of the rubber compositions (C-1 and C-2) are compared. The properties of the thee specimens T-1 to T-3, obtained from friction coefficient measurements under arbitrary suitable conditions (snow or wet ground, normal stress, sliding velocity and temperature) are given in Table 3, a value greater than that of the reference composition T-1, arbitrarily set at 100, indicating an improved result, i.e. an aptitude for a shorter braking distance.

- T-1: External portion: C-1, Internal portion: C-1 (a reference);
- T-2: External portion: C-2, Internal portion: C-2 (a comparative example);
- T-3: External portion: C-1, Internal portion: C-2 (an example according to the invention).

After molding into the form of block(s) and before the friction coefficient measurements, each of the test specimens was placed in a press with heated platens at a temperature (typically 160°C), and for the time that was necessary for the crosslinking of these rubber compositions (typically several tens of minutes), at a pressure (typically 16 bar).

The friction coefficient measurements on snow were carried out based on each of the test specimens sliding

at a given condition (a displacement: 0 to 0.03 m, a speed: 0 to 0.5 m/s, and an acceleration: 5 $m/s^2$) over a hard pack snow track, set at about -10°C with a CTI penetrometer reading of about 90 in accordance with to Standard ASTM F1805, with an imposed normal stress (about 300 kPa). The forces generated in a direction of travel (Fx) of each of the test specimens and in another direction perpendicular to the travel (Fz) were measured. The Fx/Fz ratio determines the friction coefficient of each of the test specimens on the snow. This test, the principle of which is well known to a person skilled in the art (see, for example, an article entitled "Investigation of rubber friction on snow for tires" written by Sam Ella, Pierre-Yves Formagne, Vasileios Koutsos and Jane R. Blackford (38th LEEDS-Lyons Symposium on tribology, Lyons, 6-9 Sep. 2011)) makes it possible to evaluate, under representative conditions, the grip on snow which would be obtained after a running test on a vehicle fitted with tires whose tread is composed of the same rubber compositions.

The friction coefficient measurements on wet were carried out according to a method identical to that described by L. Busse, A. Le Gal, and M. Kuppel (Modelling of Dry and Wet Friction of Silica Filled Elastomers on Self-Affine Road Surfaces, Elastomere Friction, 2010, 51, p. 8). The ground used for carrying out these measurements was a core removed from an actual road surface made of asphalt concrete of BBTM (very thin asphalt concrete) type (standard NF P 98-137). In order to prevent the phenomena of dewetting and the appearance of secondary grip forces between the ground and the material, the ground + test specimen system was immersed in a 5% aqueous solution of a surfactant (Sinnozon - sing a thermostatic bath. The test specimen was subjected to a sliding movement in translation parallel to the plane of the ground. The sliding velocity SV was set at 5 m/s. The applied normal stress was about 300 kPa. These conditions are described hereinbelow by "wet ground conditions". The forces generated in a direction of travel (Fx) of each of the test specimens and in another direction perpendicular to the travel (Fz) were measured. The Fx/Fz ratio determines the friction coefficient of each of the test specimens on the wet. The relative values indicated in Table 3 are the friction coefficient values measured at an aqueous solution temperature (about 20°C), obtained at steady state after stabilization of the value of Fx.

The results from Table 3 demonstrate that the test specimen T-3 according to the invention has certainly higher value of the grip performance on snow than that of the test specimen T-1 (the reference), and maintains (or improves) the grip performance on wet in comparison with the test specimen T-1 (or T-2). Moreover, the test specimen T-3 according to the invention shows higher mean friction coefficients (between snow and wet ones) than that of the others (T-1 and T-2).

In conclusion, the rubber compositions of the tread of the tire according to the invention make possible an improvement of grip on snowy ground of the tire without deteriorating the grip on wet ground.

[Table 1]

| | C-1 | C-2 |
|---|---|---|
| BR (1) | 40 | 30 |
| SBR1 (2) | 60 | |
| SBR2 (3) | | 70 |
| Carbon black (4) | 4 | 5 |
| Silica (5) | 115 | 70 |
| Coupling agent (6) | 9.2 | 5.6 |
| Liquid plasticizer 1 (7) | 40 | |
| Liquid plasticizer 2 (8) | | 10 |
| Liquid plasticizer 3 (9) | | 25 |
| Hydrocarbon resin (10) | 30 | |
| ZnO | 1.4 | 1.3 |
| Stearic acid | 3 | 2.4 |
| Antiozone wax | 1.9 | 0.7 |
| Antioxidant (11) | 2.7 | 2.6 |
| DPG (12) | 2.1 | 1.3 |
| Sulphur | 1.4 | 3 |

(continued)

| | C-1 | C-2 |
|---|---|---|
| Accelerator (13) | 1.6 | 2.5 |

(1) BR: BR with 0.3% of 1,2 vinyl; 2.7% of trans; 97% of cis-1,4 ($Tg_{DSC}$ = -105°C);
(2) SBR1: solution SBR with 27% of styrene unit and 24% of unit 1,2 of the butadiene part ($Tg_{DSC}$ = -48°C) bearing a SiOR function, R being a hydrogen atom, the SiOR being dimethylsilanol function at the end of the elastomer chain, the SBR prepared according to a process described in a patent EP 0 778 311 B1;
(3) SBR2: solution SBR with 16% of styrene unit and 24 % of unit 1,2 of the butadiene part ($Tg_{DSC}$ = -65°C) bearing a SiOR function, R being a methyl radical, the SiOR function not located at the ends of the elastomer chain; wherein the silicon atom of the SiOR function is inserted between the carbon-carbon bonds of the elastomer chain; the SBR further bearing a tertiary amine function made of the amine substituted with two methyl radicals; wherein the nitrogen atom of the amine function is not inserted between the carbon-carbon of the elastomer chain, and the SiOR function bears the amine function; the SBR prepared according to a process described in a patent EP 2 285 852 B1;
(4) Carbon black: Carbon black (ASTM grade N234 from Cabot);
(5) Silica: Silica ("Zeosil 1165MP" from Rhodia (CTAB, BET: about 160 $m^2/g$));
(6) Coupling agent TESPT ("Si69" from Evonik);
(7) Oleic sunflower oil ("Agripure 80" from Cargill, Weight percent oleic acid: 100%);
(8) MES oil ("Catenex SNR" from Shell);
(9) Liquid polybutadiene ("LBR-307" from Kraray, number-average molar mass (Mn): 8000 g/mol, $Tg_{DSC}$= -95°C);
(10) Hydrocarbon resin $C_5/C_9$ type ("Escorez ECR-373" from Exxon, $Tg_{DSC}$= 44°C).
(11) N-(1,3-dimethylbutyl)-N-phenyl-para-phenylenediamine ("Santoflex 6-PPD" from Flexsys);
(12) Diphenylguanidine ("Perkacit DPG" from Flexsys);
(13) N-dicyclohexyl-2-benzothiazolesulphenamide ("Santocure CBS" from Flexsys).

[Table 2]

| Rubber composition | C-1 | C-2 |
|---|---|---|
| G* (-10°C, 0.25MPa, 10Hz) [MPa] (14) | 4.0 | 1.5 |
| G* (40°C, 0.7MPa, 10Hz) [MPa] (15) | 1.1 | 1.1 |
| Tg [°C] (16) | -27 | -55 |

(14) Dynamic shear modulus G* when subjected to an alternating maximum stress of 0.25 MPa, at a frequency of 10 Hz and at a temperature of -10°C, measured on the Metravib VA4000 type viscoanalyzer in accordance with ASTM D5992-96;
(15) Dynamic shear modulus G* when subjected to an alternating maximum stress of 0.70 MPa, at a frequency of 10 Hz and at a temperature of 40°C, measured on the Metravib VA4000 type viscoanalyzer in accordance with ASTM D5992-96;
(16) Glass transition temperature on the maximum tan$\delta$ when subjected to an alternating maximum stress of 0.70 MPa at a frequency of 10 Hz, measured on the Metravib VA4000 type viscoanalyzer in accordance with ASTM D5992-96.

[Table 3]

| | T-1 | T-2 | T-3 |
|---|---|---|---|
| First rubber composition | C-1 | C-2 | C-1 |
| Second rubber composition | C-1 | C-2 | C-2 |
| Snow $\mu$ laboratory | 100 | 110 | 110 |
| Wet $\mu$ laboratory | 100 | 70 | 100 |
| Mean $\mu$ | 100 | 85 | 105 |

## Claims

1. A tire having a tread comprising at least two radially superposed portions which comprise a radially external portion intended to come into contact with ground during rolling, the radially external portion being made of a first rubber composition, and a radially internal portion made of a second rubber composition which is different from the first rubber composition;
wherein the first rubber composition is based on at least:

    - an elastomer matrix;
    - a reinforcing filler comprising between 80 and 200 phr of a reinforcing inorganic filler; and
    - a plasticizing agent comprising 0 to less than 20 phr of a liquid diene polymer having a glass transition temperature of less than -70°C;

    wherein the second rubber composition is based on at least:

    - an elastomer matrix;
    - a reinforcing filler comprising 20 to 200 phr of a reinforcing inorganic filler; and
    - a plasticizing agent comprising between 5 and 100 phr of a liquid diene polymer having a glass transition temperature of less than -70°C;

    wherein the amount in phr of the liquid diene polymer in the first rubber composition is lower than that in the second rubber composition.

2. The tire according to Claim 1, wherein the second rubber composition is such that the elastomer matrix comprises at least a diene elastomer selected from the group consisting of polybutadienes, natural rubber, synthetic polyisoprenes, butadiene copolymers, isoprene copolymers, and the mixtures thereof.

3. The tire according to Claim 1, wherein the second rubber composition is such that the elastomer matrix comprising 20 to 100 phr of a first diene elastomer bearing at least one SiOR function, R being hydrogen or a hydrocarbon radical, and optionally, 0 to 80 phr of a second diene elastomer which is different from the first diene elastomer.

4. The tire according to Claim 3, wherein the second rubber composition is such that the first diene elastomer is a styrene-butadiene copolymer.

5. The tire according to Claim 3 or Claim 4, wherein the second rubber composition is such that the SiOR function is not located at the chain ends of the first diene elastomer.

6. The tire according to any one of Claims 3 to 5, wherein the second rubber composition is such that the first diene elastomer further bears at least one amine function.

7. The tire according to Claim 6, wherein the second rubber composition is such that the SiOR function bears the amine function.

8. The tire according to any one of Claims 3 to 7, wherein the second rubber composition is such that R of the SiOR function is a hydrocarbon radical.

9. The tire according to any one of Claims 3 to 8, wherein the second rubber composition is such that the first diene elastomer has a glass transition temperature of lower than -40°C.

10. The tire according to any one of Claims 3 to 9, wherein the second rubber composition is such that the second diene elastomer is selected from the group consisting of natural rubber, synthetic polyisoprenes, polybutadienes, butadiene copolymers, isoprene copolymers, and the mixtures thereof, preferably a polybutadiene.

11. The tire according to any one of Claims 1 to 10, wherein the first and the second rubber compositions are such that the reinforcing inorganic filler is silica.

12. The tire according to any one of Claims 1 to 11, wherein the first and the second rubber compositions are such that the liquid diene polymer has a number average molar mass of 500 to 50000 g/mol.

13. The tire according to any one of Claims 1 to 12, wherein the first and the second rubber compositions are such that the liquid diene polymer is a liquid polybutadiene.

14. The tire according to any one of Claims 1 to 13, wherein the radially internal portion is adjacent to the radially external portion.

15. The tire according to any one of Claims 1 to 14, wherein the tire is a snow tire.

## Patentansprüche

1. Reifen, der eine Lauffläche aufweist, die mindestens zwei radial überlagerte Abschnitte umfasst, die einen radial äußeren Abschnitt, der dazu bestimmt ist, beim Rollen in Kontakt mit dem Boden zu kommen, wobei der radial äußere Abschnitt aus einer ersten Gummizusammensetzung gefertigt ist, und einen radial inneren Abschnitt umfassen, der aus einer zweiten Gummizusammensetzung gefertigt ist, die sich von der ersten Gummizusammensetzung unterscheidet;
wobei die erste Gummizusammensetzung mindestens basiert auf:

   - einer Elastomer-Matrix;
   - einem Verstärkungsfüllstoff, der zwischen 80 und 200 phr eines anorganischen Verstärkungsfüllstoffes umfasst; und
   - einem Weichmachermittel, das 0 bis weniger als 20 phr eines flüssigen Dienpolymers umfasst, das eine Glasübergangstemperatur von weniger als -70 °C aufweist;

   wobei die zweite Gummizusammensetzung mindestens basiert auf:

   - einer Elastomer-Matrix;
   - einem Verstärkungsfüllstoff, der 20 bis 200 phr eines anorganischen Verstärkungsfüllstoffes umfasst; und
   - einem Weichmachermittel, das zwischen 5 und 100 phr eines flüssigen Dienpolymers umfasst, das eine Glasübergangstemperatur von weniger als -70 °C aufweist;

   wobei die Menge an phr des flüssigen Dienpolymers in der ersten Gummizusammensetzung geringer als jene in der zweiten Gummizusammensetzung ist.

2. Reifen nach Anspruch 1, wobei die zweite Gummizusammensetzung derart ist, dass die Elastomer-Matrix mindestens ein Dienelastomer umfasst, das aus der Gruppe ausgewählt wird, die aus Polybutadienen, Naturgummi, synthetischen Polyisoprenen, Butadiencopolymeren, Isoprencopolymeren und Gemischen daraus besteht.

3. Reifen nach Anspruch 1, wobei die zweite Gummizusammensetzung derart ist, dass die Elastomer-Matrix, die 20 bis 100 phr eines ersten Dienelastomers umfasst, mindestens eine SiOR-Funktion trägt, wobei R Wasserstoff oder ein Kohlenwasserstoffrest ist, und optional 0 bis 80 phr eines zweiten Dienelastomers, das sich von dem ersten Dienelastomer unterscheidet.

4. Reifen nach Anspruch 3, wobei die zweite Gummizusammensetzung derart ist, dass das erste Dienelastomer ein Styrol-Butadien-Copolymer ist.

5. Reifen nach Anspruch 3 oder Anspruch 4, wobei die zweite Gummizusammensetzung derart ist, dass sich die SiOR-Funktion nicht an den Kettenenden des ersten Dienelastomers befindet.

6. Reifen nach einem der Ansprüche 3 bis 5, wobei die zweite Gummizusammensetzung derart ist, dass das erste Dienelastomer weiter mindestens eine Aminfunktion trägt.

7. Reifen nach Anspruch 6, wobei die zweite Gummizusammensetzung derart ist, dass die SiOR-Funktion die Aminfunktion trägt.

8. Reifen nach einem der Ansprüche 3 bis 7, wobei die zweite Gummizusammensetzung derart ist, dass R der SiOR-Funktion ein Kohlenwasserstoffrest ist.

**9.** Reifen nach einem der Ansprüche 3 bis 8, wobei die zweite Gummizusammensetzung derart ist, dass das erste Dienelastomer eine Glasübergangstemperatur von weniger als -40 °C aufweist.

**10.** Reifen nach einem der Ansprüche 3 bis 9, wobei die zweite Gummizusammensetzung derart ist, dass das zweite Dienelastomer aus der Gruppe ausgewählt wird, die aus Naturgummi, synthetischen Polyisoprenen, Polybutadienen, Butadiencopolymeren, Isoprencopolymeren und Gemischen daraus besteht, vorzugsweise ein Polybutadien ist.

**11.** Reifen nach einem der Ansprüche 1 bis 10, wobei die erste und die zweite Gummizusammensetzung derart sind, dass der anorganische Verstärkungsfüllstoff Siliciumdioxid ist.

**12.** Reifen nach einem der Ansprüche 1 bis 11, wobei die erste und die zweite Gummizusammensetzung derart sind, dass das flüssige Dienpolymer eine zahlenmittlere Molmasse von 500 bis 50 000 g/mol aufweist.

**13.** Reifen nach einem der Ansprüche 1 bis 12, wobei die erste und die zweite Gummizusammensetzung derart sind, dass das flüssige Dienpolymer ein flüssiges Polybutadien ist.

**14.** Reifen nach einem der Ansprüche 1 bis 13, wobei der radial innere Abschnitt angrenzend an den radial äußeren Abschnitt ist.

**15.** Reifen nach einem der Ansprüche 1 bis 14, wobei der Reifen ein Winterreifen ist.

**Revendications**

**1.** Pneu ayant une bande de roulement comprenant au moins deux portions superposées radialement qui comprennent une portion radialement externe destinée à venir au contact du sol pendant le roulement, la portion radialement externe étant constituée d'une première composition de caoutchouc, et une portion radialement interne constituée d'une seconde composition de caoutchouc qui est différente de la première composition de caoutchouc ;
dans lequel la première composition de caoutchouc est basée sur au moins :

- une matrice d'élastomère ;
- une charge renforçante comprenant entre 80 et 200 pce d'une charge inorganique renforçante ; et
- un agent plastifiant comprenant 0 à moins de 20 pce d'un polymère de diène liquide ayant une température de transition vitreuse de moins de -70 °C ;

dans lequel la seconde composition de caoutchouc est basée sur au moins :

- une matrice d'élastomère ;
- une charge renforçante comprenant 20 à 200 pce d'une charge inorganique renforçante ; et
- un agent plastifiant comprenant entre 5 et 100 pce d'un polymère de diène liquide ayant une température de transition vitreuse de moins de -70 °C ;

dans lequel la quantité en pce du polymère de diène liquide dans la première composition de caoutchouc est inférieure à celle dans la seconde composition de caoutchouc.

**2.** Pneu selon la revendication 1, dans lequel la seconde composition de caoutchouc est telle que la matrice d'élastomère comprend au moins un élastomère de diène sélectionné dans le groupe consistant en des polybutadiènes, du caoutchouc naturel, des polyisoprènes de synthèse, des copolymères de butadiène, des copolymères d'isoprène, et leurs mélanges.

**3.** Pneu selon la revendication 1, dans lequel la seconde composition de caoutchouc est telle que la matrice d'élastomère comprend 20 à 100 pce d'un premier élastomère de diène porteur d'au moins une fonction SiOR, R étant un atome d'hydrogène ou un radical hydrocarbure, et éventuellement, 0 à 80 pce d'un second élastomère de diène qui est différent du premier élastomère de diène.

**4.** Pneu selon la revendication 3, dans lequel la seconde composition de caoutchouc est telle que le premier élastomère de diène est un copolymère de styrène-butadiène.

5. Pneu selon la revendication 3 ou la revendication 4, dans lequel la seconde composition de caoutchouc est telle que la fonction SiOR n'est pas située au niveau des extrémités de chaîne du premier élastomère de diène.

6. Pneu selon l'une quelconque des revendications 3 à 5, dans lequel la seconde composition de caoutchouc est telle que le premier élastomère de diène est en outre porteur d'au moins une fonction amine.

7. Pneu selon la revendication 6, dans lequel la seconde composition de caoutchouc est telle que la fonction SiOR est porteuse de la fonction amine.

8. Pneu selon l'une quelconque des revendications 3 à 7, dans lequel la seconde composition de caoutchouc est telle que R de la fonction SiOR est un radical hydrocarbure.

9. Pneu selon l'une quelconque des revendications 3 à 8, dans lequel la seconde composition de caoutchouc est telle que le premier élastomère de diène a une température de transition vitreuse inférieure à -40 °C.

10. Pneu selon l'une quelconque des revendications 3 à 9, dans lequel la seconde composition de caoutchouc est telle que le second élastomère de diène est sélectionné dans le groupe consistant en du caoutchouc naturel, des polyisoprènes de synthèse, des polybutadiènes, des copolymères de butadiène, des copolymères d'isoprène, et leurs mélanges, de préférence un polybutadiène.

11. Pneu selon l'une quelconque des revendications 1 à 10, dans lequel les première et seconde compositions de caoutchouc sont telles que la charge inorganique renforçante est la silice.

12. Pneu selon l'une quelconque des revendications 1 à 11, dans lequel les première et seconde compositions de caoutchouc sont telles que le polymère de diène liquide présente une masse moléculaire moyenne en nombre de 500 à 50 000 g/mol.

13. Pneu selon l'une quelconque des revendications 1 à 12, dans lequel les première et seconde compositions de caoutchouc sont telles que le polymère de diène liquide est un polybutadiène liquide.

14. Pneu selon l'une quelconque des revendications 1 à 13, dans lequel la portion radialement interne est adjacente à la portion radialement externe.

15. Pneu selon l'une quelconque des revendications 1 à 14, dans lequel le pneu est un pneu neige.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012069565 A
- EP 2285852 B1
- WO 03016387 A
- WO 9637547 A
- WO 9928380 A
- WO 03002648 A
- WO 03002649 A
- WO 2004033548 A
- WO 02083782 A
- US 7217751 B
- WO 0230939 A
- US 6774255 B
- WO 0231041 A
- US 2004051210 A
- WO 2006125532 A
- WO 2006125533 A
- WO 2006125534 A
- US 6849754 B
- WO 9909036 A
- WO 2006023815 A
- WO 2007098080 A
- WO 2008055986 A
- WO 2010072685 A
- EP 0778311 B1


### Non-patent literature cited in the description


- *The Journal of the American Chemical Society,* February 1938, vol. 60, 309
- **SAM ELLA ; PIERRE-YVES FORMAGNE ; VASILEIOS KOUTSOS ; JANE R. BLACKFORD.** Investigation of rubber friction on snow for tires. *38th LEEDS-Lyons Symposium on tribology,* 06 September 2011
- **L. BUSSE ; A. LE GAL ; M. KUPPEL.** Modelling of Dry and Wet Friction of Silica Filled Elastomers on Self-Affine Road Surfaces. *Elastomere Friction,* 2010, vol. 51, 8